# EUROPÄISCHE PATENTSCHRIFT

(11) **EP 0 540 811 B1**
(45) Veröffentlichungstag und Bekanntmachung des Hinweises auf die Patenterteilung: **18.06.1997**
(21) Anmeldenummer: 92107842.4
(22) Anmeldetag: 09.05.1992
(51) Int. Cl.: F02D 11/10

(54) **Einrichtung zur Verstellung einer Drosselklappe**
Positioning device for throttle valve
Dispositif pour le positionnement d'un clapet d'étranglement

(30) Priorität: 02.11.1991 DE 4136131
(43) Veröffentlichungstag der Anmeldung: 12.05.1993
(73) Patentinhaber: VDO Adolf Schindling AG, D-60487 Frankfurt (DE)
(72) Erfinder: Bellon, Torsten, W-6233 Kelkheim (DE); Köhler, Stefan, W-6000 Frankfurt 50 (DE)
(74) Vertreter: Klein, Thomas, Dipl.-Ing. (FH)

(56) Entgegenhaltungen:
- WO-A-91/18194
- DE-A- 4 002 134
- DE-A- 4 036 329
- US-A- 4 896 640

## Beschreibung

Die Erfindung bezieht sich auf eine Einrichtung zur Verstellung einer im Ansaugstutzen einer Brennkraftmaschine drehbar gelagerten Drosselklappe (DK), gemäß 1. Teil des Anspruchs 1 bzw. 3 (vergl. US-A- 4 896 640).

Derartige Einrichtungen werden eingesetzt, wenn die DK unabhängig vom Fahrpedal verstellt werden soll, beispielsweise für eine Leerlaufregelung bei entlastetem Fahrpedal, für eine Begrenzung der Fahrzeuggeschwindigkeit, für eine Abregelung zur Vermeidung des Durchdrehens der Antriebsräder oder für eine automatische Regelung der Fahrgeschwindigkeit. In allen Fällen werden Signale entsprechender Sensoren in der elektronischen Regeleinrichtung ausgewertet und daraus Ansteuersignale für den Stellmotor gewonnen. Auf diese Weise kann die Leistung der Brennkraftmaschine im Leerlaufbetrieb, d.h. bei entlastetem Fahrpedal und ohne daß der Fahrer sonstwie eingreift, an den schwankenden Leistungsbedarf angepaßt werden. Dabei sind unter Umständen erhebliche Brennstoffeinsparungen zu realisieren, weil Brennkraftmaschinen in Kraftfahrzeugen mit zunehmender Verkehrsdichte oft bis zu 80% der Betriebszeit im Leerlauf arbeiten.

Man kann auch eine bestimmte maximale Geschwindigkeit oder Drehzahl vorgeben und mittels der Regeleinrichtung und des Stellmotors dafür sorgen, daß der eingestellte Wert nicht überschritten wird. Außerdem ist es mit einer derartigen Einrichtung möglich, die Brennkraftmaschine bei durchdrehenden Antriebsrädern automatisch herunterzuregeln und so für eine bessere Traktion zu sorgen. Schließlich erlauben solche Einrichtungen auch eine automatische Regelung der Fahrgeschwindigkeit auf einen vorgebbaren Wert.

Im Leerlaufbetrieb ist der Regelbereich durch zwei Grenzwerte definiert. Bei einer Minimumstellung (LLₘᵢₙ) der DK wird der Brennkraftmaschine nur noch so viel Verbrennungsluft zugeführt, wie zur Aufrechterhaltung des Rundlaufs der Brennkraftmaschine und ihrer unverzichtbar mitlaufenden Nebenaggregate unbedingt nötig ist. Die Maximumstellung (LLₘₐₓ) wird auf die Anzahl und den Leistungsbedarf der gleichzeitig zuschaltbaren Nebenverbraucher, wie Beleuchtung, Radio, Klimaanlage und dgl. abgestellt. Der Luftdurchsatz in Maximumstellung (LLₘₐₓ) kann um den Faktor 10 höher liegen als in Minimumstellung (LLₘᵢₙ), so daß für den Leerlaufbetrieb ein Stellbereich der DK von 0 bis 25 Winkelgrad erforderlich ist.

Neben der mit der Leerlaufregelung erzielbaren Brennstoffersparnis darf selbstverständlich die Betriebssicherheit der Brennkraftmaschine nicht vergessen werden. Während nur vom Fahrpedal verstellbare DK einen Leerlaufanschlag besitzen, der hoch genug liegt, um alle im Leerlaufbetrieb vorkommenden Belastungen der Brennkraftmaschine abzudecken, kommen bei einer Leerlaufregelung mittels Stellmotor auch DK-Stellungen vor, bei denen die Brennkraftmaschine nicht mehr rund läuft oder gar zum Stillstand kommt, wenn der Stellmotor oder die elektronische Regeleinrichtung ausfallen sollte. Solche ungewollten und für den Fahrer überraschenden, unter Umständen sogar gefährlichen Betriebsunterbrechungen müssen vermieden werden. Deshalb hat man bereits vorgeschlagen, zwischen LLₘᵢₙ und LLₘₐₓ eine Notlaufstellung LLₙₒₜ zu definieren, die die DK im Störungsfall automatisch einnehmen soll. Diese Stellung wird so gewählt, daß zwar nicht der Leistungsbedarf aller gleichzeitig zuschaltbaren Verbraucher gedeckt werden kann, daß aber mit ausreichender Sicherheit die überwiegend vorkommenden Belastungsfälle abgedeckt sind.

Konstruktiv wird die Notlaufstellung häufig durch einen verschieblichen, federbelasteten Anschlag realisiert, der vom Stellmotor bis in die Minimumstellung LLₘᵢₙ verstellt werden kann, wenn im Leerlaufbetrieb der Leistungsbedarf unterhalb der DK-Stellung LLₙₒₜ liegt (vgl. DE 39 01 585 A1, Fig. 1 und 3 Ziffern 20 bis 33, EP 0 378 736 A1; Fig. 1, Ziffern 15 bis 17, DE 39 27 004 A1, Fig. 1, Ziffern 20 bis 23).

Die Feder für den Notlauf-Anschlag muß so stark ausgelegt werden, daß sie alle entgegenstehenden Kräfte überwinden kann, dazu gehören Kräfte von entgegensetzt wirkenden Rückstellfedern, Reibungskräfte im Stellmotor und ggf. zwischengeschalteten Getrieben und Gestängen sowie Kräfte, die vom Luftstrom auf die DK rückwirken. Da es sich um eine Notlaufeinrichtung handelt, müssen außerdem ausreichend Reserven vorgesehen werden, damit bei Ausfall des Stellmotors oder der elektronischen Regeleinrichtung ein Schwenken der DK in die Stellung LLₙₒₜ gewährleistet werden kann.

Grundsätzlich ergeben sich insoweit keine Probleme für die Realisierung eines Notlaufanschlags. Eine starke NotlaufFeder erfordert aber einen starken Stellmotor mit entsprechend großem Bauvolumen. Vielfach lassen sich solche Motoren wegen der beschränkten Platzverhältnisse am Einbauort der Einrichtung nicht unterbringen. Davon abgesehen ist man aber auch aus wirtschaftlichen Gründen bestrebt, den Stellmotor und alle anderen in diesem Zusammenhang benötigten Bauteile möglichst klein zu halten.

Daraus ergibt sich die Aufgabe, für die eingangs genannte Einrichtung die Notlauffunktion so zu realisieren, daß die aufgeführten Nachteile nicht auftreten und daß insbesondere kein negativer Einfluß auf die Baugröße des Stellmotors besteht.

Diese Aufgabe läßt sich lösen mit den Merkmalen gemäß Anspruch 1 bzw. 3.

Bei der erfindungsgemäßen Einrichtung wird die DK-Stellung LLₙₒₜ mittelbar über den ersten Anschlag für das erste Stellelement, durch das am ersten Stellelement anliegende Kopplungsglied und den Anschlag für das zweite Stellelement am Kopplungsglied definiert und durch die Wirkung der Kopplungsfedern zwischen dem Kopplungsglied und den beiden Stellelementen erreicht. Im Bereich LLₙₒₜ bis LLₘᵢₙ muß der Stellmotor nur die Kopplungsfeder zwischen dem zweiten Stellelement und dem Kopplungsglied spannen. Diese Feder kann wesentlich schwächer ausgelegt werden als die bisher gebräuchliche Notlauffeder.

Vorteilhafte Ausgestaltungen sind in den Ansprüchen 2, 4 bis 9 beschrieben. Weitere Einzelheiten und Vorteile werden anhand der in den Fig. 1 bis 5 dargestellten Ausführungsbeispiele näher erläutert.
- Fig. 1: zeigt eine stark schematisierte Darstellung der erfindungsgemäßen Einrichtung für den Leerlaufregelfall,
- Fig. 2: zeigt eine Darstellung des Abregelfalles,
- Fig. 3: zeigt eine Darstellung der Geschwindigkeits-Konstantregelung,
- Fig. 4: zeigt eine Darstellung des Notlauffalles.
- Fig. 5: zeigt eine Alternativ zu Fig. 1

Zur Erläuterung der verschiedenen Funktionen von Einrichtungen zur Verstellung der DK einer Brennkraftmaschine hat man die hier angewandte, sogenannte Lineardarstellung entwickelt, bei der die in der Praxis überwiegend durch Drehung der Bauteile bewirkten Vorgänge als rein transversale Bewegungen in der Zeichenebene dargestellt sind.

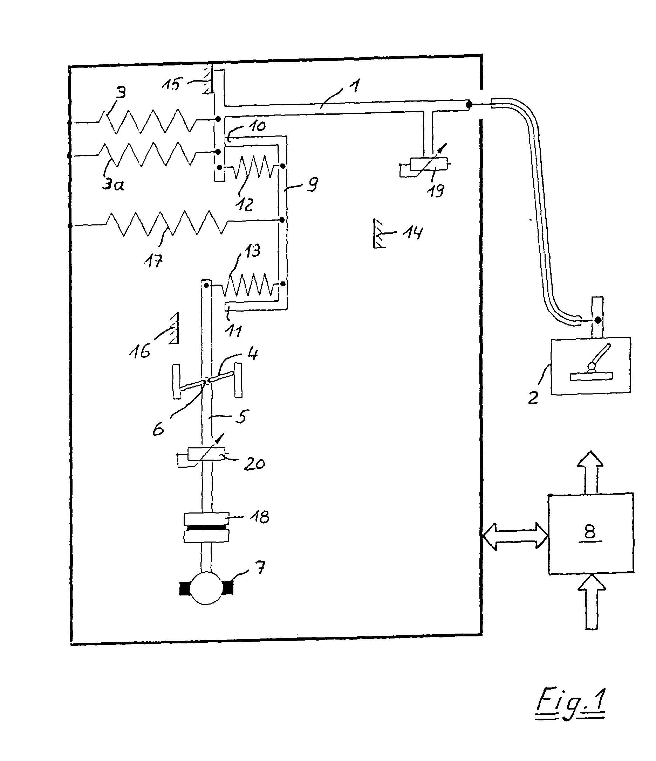

Gemäß Fig. 1 wird das vom Fahrpedal 2 in Öffnungsrichtung der DK 4 bewegbare Stellelement 1 in bekannter Weise durch eine Rückstellfeder 3 in dem Maße in Schließrichtung der DK zurückgestellt, in dem der Druck auf das Fahrpedal 2 zurückgenommen wird. Aus Sicherheitsgründen ist jeweils noch eine zweite, gleich starke Rückstellfeder 3a vorgesehen. Die Bewegung des Stellelements 1 wird in Schließrichtung der DK 4 durch einen Anschlag 15 begrenzt.

Das zweite Stellelement 5 ist drehfest mit der Welle 6 der DK 4 verbunden und in Öffnungsrichtung der DK 4 durch den Stellmotor 7 zu bewegen. Seine Bewegung wird in Schließrichtung der DK 4 durch einen Anschlag 16 begrenzt.

Zwischen dem ersten Stellglied 1 und dem zweiten Stellglied 5 ist ein Kopplungsglied 9 angeordnet, das über Anschläge 10, 11 am ersten bzw. zweiten Stellement 1,5 anliegt und über die Kopplungsfedern 12, 13 mit den beiden Stellelementen 1,5 verbunden ist. Die Bewegung des Kopplungsgliedes 9 wird in Öffnungsrichtung der DK 4 durch einen Anschlag 14 begrenzt.

Aus Sicherheitsgründen ist noch eine Rückstellfeder 17 vorgesehen, die das Kopplungsglied 9 in Schließrichtung der DK 4 vorspannt. Ferner sind noch je ein Positionsgeber 19 und 20 für das Stellelement 1 und 5 sowie zwischen Stellmotor 7 und Stellelement 5 eine Kupplung 18 vorgesehen. Die Signale der Positionsgeber 19 und 20 - und andere Signale - werden in der elektronischen Regeleinrichtung ausgewertet und zur Erzeugung von Steuersignalen für den Stellmotor 7 benutzt.

Aus der Darstellung nach Fig. 1 ist ersichtlich, daß eine Bewegung des Fahrpedals 2 über das Stellelement 1 und den Anschlag 10 auf das Kopplungsglied 9 übertragen wird, das seinerseits über die Kopplungsfeder 13 und den Anschlag 11 das zweite Stellelement 5 und damit die DK 4 in Öffnungsrichtung mitnimmt, solange nicht der Stellmotor 7 eine Bewegung in Schließrichtung der DK 4 bewirkt. Auf diese Weise kann die DK 4 vom Fahrpedal 2 und den Rückstellfedern 3 und 3a zwischen den Anschlägen 14 und 15 hin und her bewegt werden.

Aus Fig. 1 ist ferner ersichtlich, daß die DK 4 durch das zweite Stellelement 5 weiter in Schließrichtung verstellbar ist, und zwar bis an den Anschlag 16. Dabei wird nur die Kopplungsfeder 13 gedehnt; Stellelement 1 und Kopplungsglied 9 bewegen sich nicht; alle übrigen Federn 3, 3a, 12, 17 werden nicht gedehnt.

Der Anschlag 16 entspricht der Minimumstellung LLₘᵢₙ der DK 4, durch die der geringstmögliche Luftdurchsatz im Leerlaufbetrieb definiert ist.

Eine Maximumstellung LLₘₐₓ für den Leerlaufbetrieb muß als Grenzwert in der elektronischen Regeleinrichtung 8 abgelegt werden, weil der Stellmotor 7 auch für die automatische Regelung der Fahrgeschwindigkeit vorgesehen ist, bei der das Stellelement 5 in Öffnungsrichtung der DK 4 so weit verstellt werden kann, bis das Kopplungsglied 9 am Anschlag 14 anliegt, der die Vollastposition der DK 4 definiert. Für die Leerlaufregelung oberhalb von LLₙₒₜ und die Regelung der Fahrgeschwindigkeit auf einen konstanten Wert wird das Kopplungsglied 9 durch das Stellelement 5 unter Spannung der Federn 12 und 17 vom Stellelement 1 abgehoben, das durch die Rückstellfedern 3 und 3a am Anschlag 15 festgehalten wird.

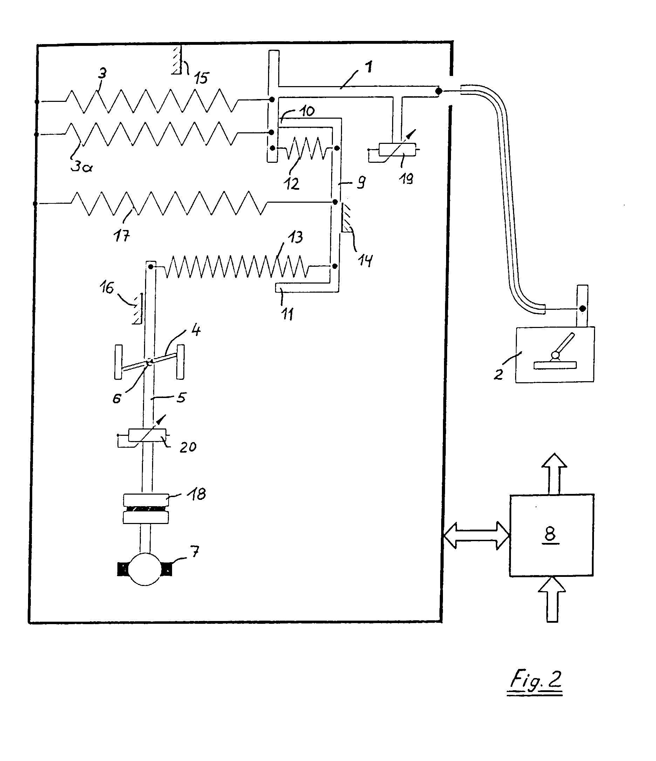

Fig. 2 zeigt den sogenannte Abregelfall. Das Stellglied 1 ist vom Fahrpedal 2 in Öffnungsrichtung der DK 4 soweit verstellt worden, daß das Kopplungsglied 9 am Anschlag 14 anliegt. Wird in dieser Situation durch äußere Sensoren festgestellt, daß die Antriebsräder durchdrehen, dann kann die Drosselklappe 4 über die elektronische Regeleinrichtung 8 und über den Stellmotor 7 in Schließrichtung verstellt werden, äußerstenfalls bis das Stellelement 5 am Anschlag 16 anliegt. Dabei behalten das Stellelement 1 und das Kopplungsglied ihre vom Fahrpedal 2 vorgegebene Position bei; das Stellglied 5 wird unter Spannung der Feder 13 vom Anschlag 11 des Kopplungsgliedes 9 abgehoben. Selbstverständlich kann dieser Eingriff in die Regelung der DK 4 auch erfolgen, wenn das Kopplungsglied 9 sich in einer Position links vom Anschlag 14 befindet und selbstverständlich muß das Abregeln der Drosselklappe 4 nicht bis zum Anschlag 16 erfolgen, wenn bereits vorher festgestellt wird, daß die Antriebsräder nicht mehr durchdrehen. Auf die gleiche Weise kann das Überschreiten einer vorgegebenen Höchstdrehzahl bzw. Höchstgeschwindigkeit unterbunden werden.

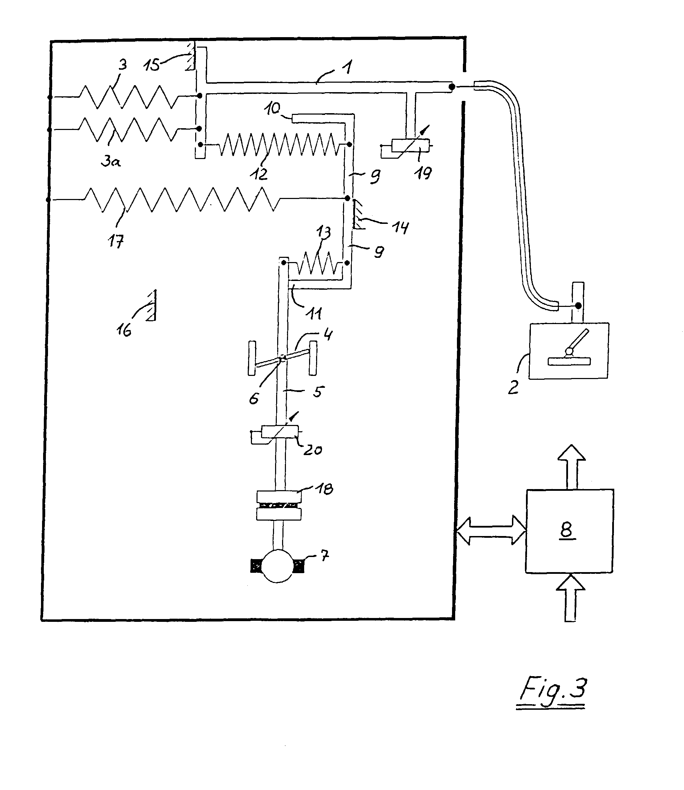

Fig. 3 zeigt, wie mit der erfindungsgemäßen Einrichtung eine vorgebbare Geschwindigkeit automatisch eingeregelt werden kann. Dabei ist das Fahrpedal 2 nicht belastet und das Stellelement 1 liegt am Anschlag 15 an. Durch den Stellmotor 7 ist der Stellelement 5, die DK 4 und das Kopplungsglied 9 in Öffnungsrichtung bis an den Anschlag 14 verstellt worden. Diese Position nimmt die Einrichtung ein, solange die tatsächliche Fahrgeschwindigkeit noch geringer ist als die vorgegebene, solange das Fahrzeug also noch beschleunigt werden muß. Ist die Soll-Geschwindigkeit erreicht oder überschritten, wird der Stellmotor 7 so angesteuert, daß er das Stellelement 5 in Schließrichtung der DK 4 bewegt. Dabei wird das Kopplungsglied 9 durch die Federn 12, 13 und 17 mitgenommen. Durch permanenten Vergleich von Ist- und Sollwert der Fahrgeschwindigkeit kann so eine vorgebene Fahrgeschwindigkeit eingehalten werden, ohne daß das Fahrpedal 2 in Aktion treten muß.

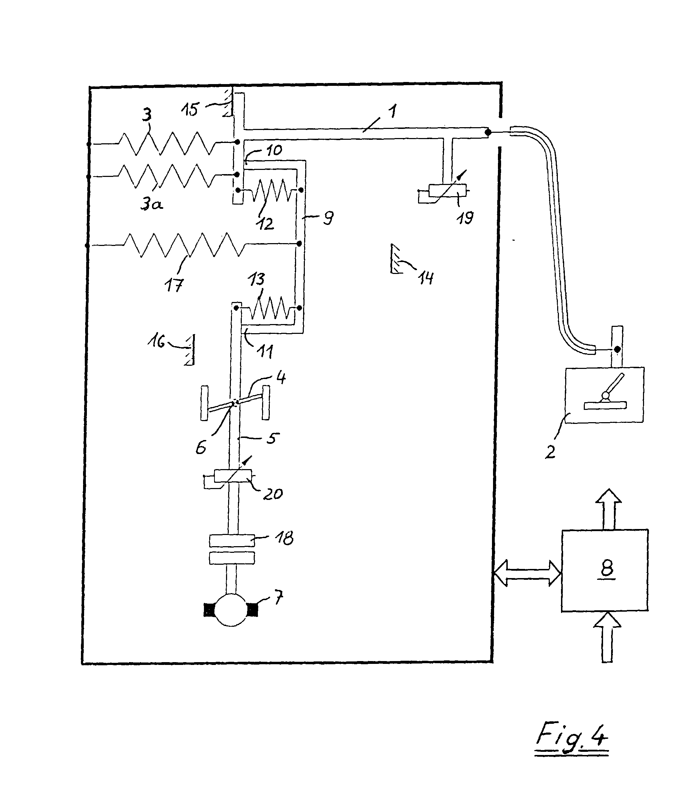

Fig. 4 schließlich zeigt den Notlauffall, bei dem der Stellmotor 7 oder die Regeleinrichtung 8 ausgefallen ist und bei dem das Stellelement 1 am Anschlag 15 anliegt, der für die DK 4 mittelbar die Notlauf-Position definiert. Das Kopplungsglied 9 liegt unter der Wirkung der Feder 12 am Stellelement 1 an und das Stellelement 5 liegt unter der Wirkung der Feder 13 am Kopplungsglied 9 an. Dadurch nimmt die DK 4 die Position LLₙₒₜ ein.

Wird - wie dargestellt - zwischen Stellmotor 7 und Stellelement 5 eine Kupplung 18 angeordnet, dann kann man im Notlauf-Fall den Stellmotor 7 vom Stellelement 5 abkoppeln, so daß die Kopplungsfeder 13 noch schwächer ausgelegt werden kann, weil sie nur die DK 4 und das Stellelement 5, nicht aber den Stellmotor und ein ggf. vorhandenes Getriebe in die Notlaufstellung bringen muß. Dies wirkt sich günstig auf das zur Spannung der Feder 13 erforderliche Drehmoment und damit auf die Baugröße des Stellmotors 7 aus.

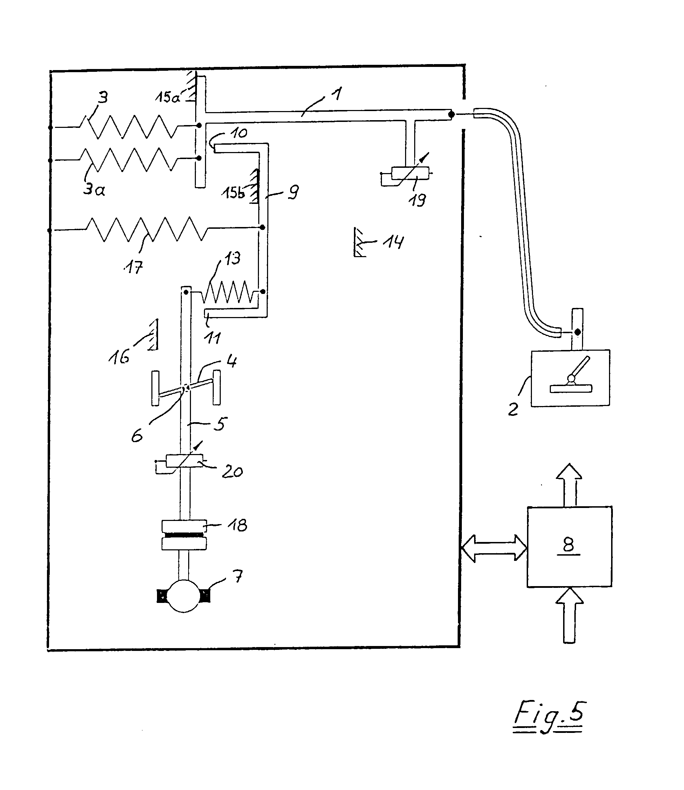

Bei der Alternativ gemäß Fig. 5 (Anspruch 3) sind vier statt drei gehäusefester Anschläge 14, 15a, 15b und 16 vorgesehen, wobei die Anschläge 14 und 16 die gleichen Funktion erfüllen wie bei der Ausführungsform nach Fig. 1. Der Anschlag 15a dient zur Definition einer Leerlaufstellung (LL) für das erste Stellelement 1, während der Anschlag 15b eine in Schließrichtung der DK 4 nicht unterschreitbaren Notlaufstellung (LLₙₒₜ) für das Kopplungsglied 9 bildet. Der Anschlag 15b liegt in Öffnungsrichtung der DK 4 oberhalb vom Anschlag 15a, so daß bei entlastetem Fahrpedal 2 zwischen dem Stellelement 1 und dem Anschlag 10 am Kopplungsglied 9 ein Zwischenraum wählbarer Größe definiert ist. Die in Fig. 1 zwischen Stellelement 1 und Kupplungsglied 9 vorgesehene Kopplungsfeder 12 kann bei der Version gemäß Fig. 5 entfallen. Alle übrigen Bauteile haben die gleiche Bedeutung und Funktion wie in Fig. 1 und müssen nicht nocheinmal erläutert werden.

Bei der Version gemäß Fig. 1 kann der ohnehin vorhandene Anschlag zur Definition der Leerlaufstellung (LL) des Stellelements 1 gleichzeitig zur Definition der Notlaufstellung (LLₙₒₜ) der DK 4 benutzt werden, wobei zweckmäßigerweise eine Einstellmöglichkeit vorgesehen wird. Diese Ausführungsform ist ohne großen zusätzlichen Aufwand realisierbar.

Bei der Version gemäß Fig. 5 hingegen kann man auf die Kopplungsfeder 12 (Fig 1) verzichten, weil die Notlaufstellung (LLₙₒₜ) durch den Anschlag 15b für das Kopplungsglied 9 definiert ist. Außerdem ist bei dieser Version besser gewährleistet, daß Rückwirkungen vom Stellmotor 7 auf das Stellelement 1 nicht bemerkbar sind, wenn aus der in Fig. 5 dargestellten Situation das Stellelement 1 vom Fahrpedal 2 in Öffnungsrichtung der DK 4 verstellt wird.

## Patentansprüche

1. Einrichtung zur Verstellung einer im Ansaugstutzen einer Brennkraftmaschine drehbar gelagerten Drosselklappe (DK), bestehend im wesentlichen aus
- einem ersten Stellelement (1), das von einem Fahrpedal (2) gegen eine erste Rückstellfeder (3) in Öffnungsrichtung der Drosselklappe (4) verstellbar ist,
- einem zweiten Stellelement (5), das drehfest mit der Welle (6) der Drosselklappe (4) verbunden ist und mittels eines Stellmotors (7) in Öffnungs- und Schließrichtung der Drosselklappe (4) verstellbar ist sowie
- einer elektronischen Regeleinrichtung (8) zur Ansteuerung des Stellmotors (7)
bei der
- zwischen dem ersten und zweiten Stellelement (1,5) ein Kopplungsglied (9) vorgesehen ist, das
- in Öffnungsrichtung der Drosselklappe (4) über je einen Mitnehmer (10, 11) sowohl vom ersten wie auch vom zweiten Stellelement (1, 5) unabhängig voneinander nehmbar ist und
dadurch gekennzeichnet, daß das Kopplungsglied
- in Schließrichtung der Drosselklappe (4) mittels je einer Kopplungsfeder (12,13) an das erste und zweite Stellelement (1, 5) angekoppelt ist,
und daß
- drei gehäusefeste Anschläge (14, 15, 16) vorgesehen sind, wobei
- der erste Anschlag (14) für das Kopplungsglied (9) und das erste und zweite Stellelement (1, 5) eine in Öffnungsrichtung der Drosselklappe (4) nicht überschreitbare Vollaststellung (VL),
- der zweite Anschlag (15) für das erste Stellelement (1) und das Kopplungsglied (9) eine in Schließrichtung der Drosselklappe (4) nicht unterschreitbare Notlaufstellung (LLₙₒₜ) und
- der dritte Anschlag (16) für das zweite Stellglied (5) eine in Schließrichtung der Drosselklappe (4) nicht unterschreitbare Minimumstellung mumstellung (LLₘᵢₙ) unterhalb der (LLₙₒₜ) definiert.

2. Einrichtung nach Anspruch 1, dadurch gekennzeichnet, daß das Kopplungsglied (9) durch eine Rückstellfeder (17) in Schließrichtung der Drosselklappe (4) vorgespannt ist.

3. Einrichtung zur Verstellung einer im Ansaugstutzen einer Brennkraftmaschine drehbar gelagerten Drosselklappe (DK), bestehend im wesentlichen aus,
- zwischen dem ersten und zweiten Stellelement (1, 5) ein Kopplungsglied (9) vorgesehen ist, das
- in Öffnungsrichtung der Drosselklappe (4) über je einen Mitnehmer (10, 11) sowohl vom ersten wie auch vom zweiten Stellelement (1, 5) unabhängig voneinander mitnehmbar ist und
- in Schließrichtung der Drosselklappe (4) mittels einer Kopplungsfeder (13) an das zweite Stellelement (5) angekoppelt sowie mittels einer Rückstellfeder (17) vorgespannt ist,
dadurch gekennzeichnet, daß
- vier gehäusefeste Anschläge (14, 15a, 15b, 16) vorgesehen sind, wobei
- der erste Anschlag (14) für das Kopplungsglied (9) und das erste und zweite Stellelement (1, 5) eine in Öffnungsrichtung der Drosselklappe (4) nicht überschreitbare Vollaststellung (VL),
- der zweite Anschlag (15a) für das erste Stellelement (1) eine in Schließrichtung der Drosselklappe (4) nicht unterschreitbare Leerlaufstellung (LL),
- der dritte Anschlag (15b) für das Kopplungsglied (9) eine in Schließrichtung
- einem ersten Stellelement (1), das von einem Fahrpedal (2) gegen eine erste Rückstellfeder (3) in Öffnungsrichtung der Drosselklappe (4) verstellbar ist,
- einem zweiten Stellelement (5), das drehfest mit der Welle (6) der Drosselklappe (4) verbunden ist und mittels eines Stellmotors (7) in Öffnunas- und Schließrichtung der Drosselklappe (4) verstellbar ist sowie
- einer elektronischen Regeleinrichtung (8) zur Ansteuerung des Stellmotors (7) bei der (4) nicht unterschreitbare Notlaufstellung (LLₙₒₜ) und
- der vierte Anschlag (16) für das zweite Stellglied (5) eine in Schließrichtung (4) nicht unterschreitbare Minimumstellung (LLₘᵢₙ) unterhalb der laufstellung (LLₙₒₜ) definiert.

4. Einrichtung nach Ansprüche 1 bis 3, dadurch gekennzeichnet, daß der Stellmotor (7) über eine Kupplung (18) mit dem zweiten Stellelement (5) verbunden ist.

5. Einrichtung nach einem der Ansprüche 1 bis 4, dadurch gekennzeichnet, daß dem ersten Stellelement (1) ein Positionsgeber (19) zugeordnet ist.

6. Einrichtung nach einem der Ansprüche 1 bis 5, dadurch gekennzeichnet, daß dem zweiten Stellelement (5) ein Positionsgeber (20) zugeordnet ist.

7. Einrichtung nach einem der Ansprüche 1 bis 6, dadurch gekennzeichnet, daß die elektronische Regeleinrichtung (8) in Abhängigkeit von Signalen, die von den Positionsgebern (19, 20) und anderen für die Steuerung der Brennkraftmaschine relevanten Sensoren ausgehen den Stellmotor (7) und die Kupplung (18) ansteuert.

8. Einrichtung nach einem der Ansprüche 1 bis 7, dadurch gekennzeichnet, daß die erste Rückstellfeder (3, 3a) doppelt ausgeführt ist.

9. Einrichtung nach einem der Ansprüche 1 bis 8, dadurch gekennzeichnet, daß die Anschläge (14, 15, 15a, 15b 16) mittels Stellschrauben oder dergl. in bestimmten Grenzen einstellbar ausgebildet sind.

## Claims

1. A device for adjusting a throttle valve (DK) which is rotatably mounted in the intake fitting of an internal combustion engine, substantially consisting of
- a first control element (1) which can be adjusted by an accelerator pedal (2) in the direction of opening of the throttle valve (4) against a first pull-back spring (3),
- a second control element (5), which is attached rotationally fixed to the spindle (6) of the throttle valve (4) and which can be adjusted in the direction of opening and closing of the throttle valve (4) by means of a servomotor (7), and of
- an electronic controller (8) for actuating the servomotor (7).
wherein
- a coupling member (9) is provided between the first and second control elements (1, 5), which coupling member
- can be entrained in the direction of opening of the throttle valve (4) both by the first and by the second control element (1, 5) independently of each other, via a catch (10, 11) in each case, and
characterised in that the coupling member
- is coupled to the first and the second control element (1, 5), in the direction of closing of the throttle valve (4), by a coupling spring (12, 13) in each case,
and that
- three stops (14, 15, 16) are provided which are fixed to the housing, wherein
- the first stop (14) defines a full load position (VL), which cannot be overshot in the direction of opening of the throttle valve (4), for the coupling member (9) and the first and second control elements (1, 5)
- the second stop (15) defines an emergency running position (LLₙₒₜ), which cannot be undershot in the direction of closing of the throttle valve (4), for the first control element (1) and the coupling member (9), and
- the third stop (16) defines a minimum position (LLₘᵢₙ), which in the direction of closing of the throttle valve (4) is below the emergency running position (LLₙₒₜ) and cannot be undershot, for the second control element (5).

2. A device according to claim 1, characterised in that the coupling member (9) is biassed in the direction of closing of the throttle valve (4) by a pull-back spring (17).

3. A device for adjusting a throttle valve (DK) which is rotatably mounted in the intake fitting of an internal combustion engine, substantially consisting of
- a first control element (1) which can be adjusted by an accelerator pedal (2) in the direction of opening of the throttle valve (4) against a first pull-back spring (3),
- a second control element (5), which is attached rotationally fixed to the spindle (6) of the throttle valve (4) and which can be adjusted in the direction of opening and closing of the throttle valve (4) by means of a servomotor (7), and of
- an electronic controller (8) for actuating the servomotor (7).
wherein
- a coupling member (9) is provided between the first and second control elements (1, 5), which coupling member
- can be entrained in the direction of opening of the throttle valve (4) both by the first and by the second control element (1, 5) independently of each other, via a catch (10, 11) in each case, and
- is coupled in the direction of closing of the throttle valve (4) to the second control element (5) by means of a coupling spring (13), and is biassed in the direction of closing of the throttle valve by a pull-back spring (17),
characterised in that
- four stops (14, 15a, 15b, 16) are provided which are fixed to the housing, wherein
- the first stop (14) defines a full load position (VL), which cannot be overshot in the direction of opening of the throttle valve (4), for the coupling member (9) and the first and second control elements (1, 5)
- the second stop (15a) defines an idle running position (LL), which cannot be undershot in the direction of closing of the throttle valve (4), for the first control element (1)
- the third stop (15b) defines an emergency running position (LLₙₒₜ), which cannot be undershot in the direction of closing of the throttle valve (4), for the coupling member (9), and
- the fourth stop (16) defines a minimum position (LLₘᵢₙ), which in the direction of closing of the throttle valve (4) is below the emergency running position (LLₙₒₜ) and cannot be undershot, for the second control element (5).

4. A device according to claims 1 to 3, characterised in that the servomotor (7) is connected to the second control element (5) via a clutch (18).

5. A device according to any one of claims 1 to 4, characterised in that a position transmitter (19) is associated with the first control element (1).

6. A device according to any one of claims 1 to 5, characterised in that a position transmitter (20) is associated with the second control element (5).

7. A device according to any one of claims 1 to 6, characterised in that the electronic controller (8) actuates the servomotor (7) and the clutch (18) depending on signals which originate from the position transmitters (19, 20) and from other sensors which are relevant to the control of the internal combustion engine.

8. A device according to any one of claims 1 to 7, characterised in that the first pull-back spring (3, 3a) is of double construction.

9. A device according to any one of claims 1 to 8, characterised in that the stops (14, 15, 15a, 15b, 16) are constructed so that they can be adjusted within defined limits by means of adjusting screws or the like.

## Revendications

1. Dispositif pour le réglage d'un clapet d'étranglement (DK) porté, avec liberté de rotation, dans la tubulure d'admission d'un moteur à combustion interne, essentiellement constitué de
- un premier élément réglant (1) qu'une pédale d'accélérateur (2) peut déplacer dans le sens de l'ouverture du clapet d'étranglement (4) à l'encontre d'un premier ressort de rappel (3),
- un second élément réglant (5) qui est relié, sans liberté de rotation relative, à l'axe (6) du clapet d'étranglement (4) et qu'un moteur réglant (7) peut déplacer dans le sens de l'ouverture ou de la fermeture du clapet d'étranglement (4), ainsi que de
- un dispositif de régulation électronique (8) pour commander le moteur réglant (7)
dans le cas duquel
- entre le premier et le second éléments réglants (1, 5) est prévu un élément de couplage (9) qui
- peut être entraîné dans le sens de l'ouverture du clapet d'étranglement (4), par l'intermédiaire de, chaque fois, un entraîneur (10, 11), aussi bien par le premier que par le second éléments réglants (1, 5), indépendamment l'un de l'autre et
caractérisé par le fait que l'élément de couplage est couplé, dans le sens de la fermeture du clapet d'étranglement (4), au premier et au second éléments réglants (1, 5) au moyen de, pour chacun, un ressort de couplage (12, 13),
et que
trois butées (14, 15, 16), fixes par rapport au carter, sont prévues, étant précisé que
- la première butée (14) définit, pour l'élément de couplage (9) et pour le premier et le seconds éléments réglants (1, 5), une position de pleine charge VL) à ne pas dépasser, par valeur supérieure, dans le sens de l'ouverture du clapet d'étranglement (4),
- la seconde butée (15) définit pour le premier élément réglant (1) et pour l'élément de couplage (9) une position de marche difficile (LLₙₒₜ) à ne pas dépasser, par valeur inférieure, dans le sens de la fermeture du clapet d'étranglement (4) et
- la troisième butée (16) définit, pour le second élément réglant (5), une position minimale (LLₘᵢₙ), en dessous de la position de marche difficile (LLₙₒₜ), à ne pas dépasser, par valeur inférieure, dans le sens de la fermeture du clapet d'étranglement (4).

2. Dispositif selon la revendication 1, caractérisé par le fait que l'élément de couplage (9) est précontraint dans le sens de la fermeture du clapet d'étranglement (4) par un ressort de rappel (17).

3. Dispositif pour le réglage d'un clapet d'étranglement (DK) porté, avec liberté de rotation, dans la tubulure d'admission d'un moteur à combustion interne, essentiellement constitué de
- un premier élément réglant (1) qu'une pédale d'accélérateur (2) peut déplacer dans le sens de l'ouverture du clapet d'étranglement (4) à l'encontre d'un premier ressort de rappel (3),
- un second élément réglant (5) qui est relié, sans liberté de rotation relative, à l'axe (6) du clapet d'étranglement (4) et qu'un moteur réglant (7) peut déplacer dans le sens de l'ouverture ou de la fermeture du clapet d'étranglement (4), ainsi que de
- un dispositif de régulation électronique (8) pour commander le moteur réglant (7)
dans le cas duquel
- entre le premier et le second éléments réglants (1, 5) est prévu un élément de couplage (9) qui
- peut être entraîné dans le sens de l'ouverture du clapet d'étranglement (4), par l'intermédiaire de, chaque fois, un entraîneur (10, 11), aussi bien par le premier que par le second éléments réglants (1, 5), indépendamment l'un de l'autre et
- qui est couplé, dans le sens de la fermeture du clapet d'étranglement (4), au second élément réglant (5) au moyen d'un ressort de couplage (13) ainsi que précontraint au moyen d'un ressort de rappel (17),
caractérisé par le fait que
- quatre butées (14, 15a, 15b, 16), fixes par rapport au carter, sont prévues, étant précisé que
- la première butée (14) définit, pour l'élément de couplage (9) et pour le premier et le seconds éléments réglants (1, 5), une position de pleine charge VL) à ne pas dépasser, par valeur supérieure, dans le sens de l'ouverture du clapet d'étranglemcnt (4),
- la seconde butée (15a) définit, pour le premier élément réglant (1), une position de marche à vide (LL) à ne pas dépasser, par valeur inférieure, dans le sens de la fermeture du clapet d'étranglement (4),
- la troisième butée (15b) définit, pour l'élément de couplage (9), une position de marche difficile (LLₙₒₜ) à ne pas dépasser, par valeur inférieure, dans le sens de la fermeture du clapet d'étranglement (4) et
- la quatrième butée (16) définit, pour le second élément réglant (5), une position minimale (LLₘᵢₙ), en dessous de la position de marche difficile (LLₙₒₜ), à ne pas dépasser, par valeur inférieure, dans le sens de la fermeture du clapet d'étranglement (4).

4. Dispositif selon les revendications 1 à 3, caractérisé par le fait que le moteur réglant (7) est relié au second élément réglant (5) par un couplage (18).

5. Dispositif selon l'une des revendications 1 à 4, caractérisé par le fait qu'au premier élément réglant (1) est associé un émetteur de position (19).

6. Dispositif selon l'une des revendications 1 à 5 caractérisé par le fait qu'au second élément réglant (5) est associé un émetteur de position (20).

7. Dispositif selon l'une des revendications 1 à 6 caractérisé par le fait que le dispositif de régulation électronique (8) commande le moteur réglant (7) et le couplage (18) en fonction de signaux qui parvicnnent des émetteurs de position (19, 20) ainsi que d'autres pour la commande des détecteurs pertinents du moteur à combustion interne.

8. Dispositif selon l'une des revendications 1 à 7 caractérisé par le fait que le premier ressort de rappel (3, 3a) est réalisé en double.

9. Dispositif selon l'une des revendications 1 à 8 caractérisé par le fait que les butées (14, 15, 15a, 15b, 16) sont conçues réglables, dans des limites déterminées, au moyen de vis de réglage ou analogue.
